Europäisches Patentamt

European Patent Office

Office européen des brevets

(19)

(11) Numéro de publication: **0 251 917**
**B1**

(12) **FASCICULE DE BREVET EUROPEEN**

(45) Date de publication du fascicule du brevet: **05.09.90**

(51) Int. Cl.⁵: **F 17 C 3/00, B 65 D 90/50**

(21) Numéro de dépôt: **87401490.5**

(22) Date de dépôt: **29.06.87**

(54) **Procédé de surveillance de l'étanchéité d'un stockage et dispositif de stockage pour le mettre en oeuvre.**

(30) Priorité: **02.07.86 FR 8609650**

(43) Date de publication de la demande:
**07.01.88 Bulletin 88/01**

(45) Mention de la délivrance du brevet:
**05.09.90 Bulletin 90/36**

(84) Etats contractants désignés:
**AT BE CH DE ES FR GB GR IT LI LU NL SE**

(56) Documents cités:
**EP-A-0 005 133
DE-B-1 243 375
FR-A-2 517 802
US-A-3 364 729**

(73) Titulaire: **Société française de stockage
géologique "GEOSTOCK" (Société à
responsabilité limitée)
Tour Aurore - Cédex No 5
F-92080 Paris La Défense 2 (FR)**

(72) Inventeur: **Grappe, Jacques
55 avenue de Breteuil
F-75007 Paris (FR)**

(74) Mandataire: **Pinguet, André
Cabinet de Proprieté Industrielle CAPRI 28 bis,
avenue Mozart
F-75016 Paris (FR)**

Courier Press, Leamington Spa, England.

# Description

La présente invention concerne un procédé de surveillance de l'étanchéité d'un stockage, et un dispositif de stockage de produits dangereux, notamment des gaz sous pression ou des gaz liquéfiés ou des liquides, permettant de mettre en oeuvre ce procédé.

On connaît déjà des procédés de surveillance de l'étanchéité d'un stockage, par exemple celui qui est décrit dans la demande de brevet français n° 83 06822 au nom de la société Géostock. Celle-ci décrit un stockage souterrain d'un produit liquéfiable et miscible à l'eau tel que l'ammoniac, dans lequel le stockage est installé à une profondeur telle que la pression hydrostatique de l'eau dans le massif soit supérieure à la plus forte pression prévisible pour le produit stocké et, le stockage étant effectué dans une enveloppe imperméable logée dans la cavité, on prévoit autour de ladite enveloppe un espace annulaire de drainage maintenu à une pression inférieure à la plus basse pression prévisible pour le produit stocké. Ainsi, en cas de rupture de l'enveloppe, le produit est récupéré dans un puits rempli d'eau car descendant jusqu'au niveau de la cavité, et il est possible de l'y détecter. De plus il n'y a alors pas de pollution de produit par l'eau, ni de contamination de la nappe phréatique.

Cependant ce procédé de l'art antérieur suppose pour fonctionner que le stockage soit disposé sous la nappe phréatique, à une profondeur en rapport avec la pression des produits qui y sont conservés. Le brevet américain US—A—3 364 729 divulgue, quant à lui, un dispositif permettant de détecter des fuites dans des stockages moins particuliers. En l'occurrence, ce dispositif a été développé dans le cadre des réservoirs d'hydrocarbures tel qu'on en rencontre sur les navires. Il s'agit en effet d'enceintes à double enveloppe qui renferment les gaz maintenus sous forme liquide grâce à de basses températures. Dans l'espace intermédiaire entre les enveloppes, ce document de l'art antérieur enseige en outre à introduire par exemple les hydrocarbures stockés, mais sous forme gazeuse cette fois, et à leur mélanger un additif. L'ensemble gazeux à l'intérieur de l'espace intermédiaire est par ailleurs maintenu à une pression inférieure à la pression régnant dans le réservoir par lui-même. C'est ainsi qu'un analyseur de gaz prélève de temps en temps une petite quantité du mélange présent entre les deux enveloppes de l'enceinte. Dès qu'une chute de la proportion d'additif dans le mélange est observée, on sait que des fuites d'hydrocarbures hors de l'enveloppe intérieure se sont produites.

Si ce dernier dispositif et le procédé de surveillance de l'étanchéité du stockage qu'il permet de mettre en oeuvre sont efficaces, leur adaptation à des réservoirs souterrains ne représente pas un intérêt immédiat. En effet, ils renseignent bien sur l'apparition de fuites mais n'indiquent pas l'emplacement du dommage de l'enveloppe intériéure qui est à leur origine. Or, on conçoit qu'un rupture localisée au fond de l'enveloppe ou au niveau de son col (par où le réservoir communique avec la surface) n'a pas la même incidence sur le coût de la réparation, voire de l'exploitation même du site de stockage en relation avec sa durée d'indisponibilité. Dans un cas, il convient de retirer l'enveloppe de la cavité souterraine afin de la colmater en surface. Dans l'autre, on peut se contenter tout d'abord der remonter les conduits d'amenée des produits stockés et de soutirage en vue de les inspecter. Ceux-ci sont d'ordinaire disposés dans le col du réservoir si bien que la fuite repérée est tout à fait susceptible d'être associée à une fissure d'un de ces conduits. S'ils sont intacts, on peut ensuite démonter les systèmes de fermeture interne et externe du col au travers desquels passent les conduits évoqués précédemment. En d'autres termes, les vérifications de la tenue du col demeurent beaucoup plus directes et sont donc moins onéreuses.

Il s'ensuit que la présente invention vise à développer un procédé de surveillance de l'étanchéité d'un stockage notamment souterrain permettant d'évaluer la difficulté de réparation en cas de fuites. Le présent procédé vise en particulier à détermine si le dommage associé aux fuites se situe au niveau du col du réservoir de stockage. La présente invention a également pour but de proposer un dispositif pour mettre en oeuvre ce procédé.

Dans ce but, la présente invention prévoit un procédé de surveillance de l'étanchéité d'un stockage d'un produit fluide sous pression consistant:

à disposer ledit produit dans une enveloppe intérieure étanche entourée d'une enveloppe extérieure rigide également étanche, un espace intermédiaire étant maintenu entre ladite enveloppe intérieure et ladite enveloppe extérieure pour acceuillir un fluide en phase continue de composition ainsi qu'à une pression différentes de celles dudit produit stocké;

à surveiller les variations de ladite composition dudit fluide dans ledit espace intermédiaire, caractérisé en ce que les variations de ladite pression dudit fluide dans ledit espace intermédiaire sont également surveillées et en ce qu'un sol s'étend vers l'extérieur depuis ladite enveloppe intérieure au moins jusqu'à ladite enveloppe extérieure, ledit col étant fermé de façon étanche au niveau de ladite enveloppe intérieure par un bouchon et au niveau de ladite enveloppe extérieure par une fermeture extérieure de manière à définir un premier compartiment dudit espace intermédiaire, ledit bouchon et ladite fermeture extérieure dudit col étant travesés par des conduits de mouvement dudit produit stocké dans ladite enveloppe intérieure, un second compartiment étant défini par le reste dudit espace intermédiaire entre lesdits enveloppes, les variations de ladite composition et de ladite pression dudit fluide étant surveillées séparément dans chacun desdits deux compartiments.

D'autres caractéristiques du présent procédé peuvent être lues dans les revendications dépendantes 2 à joints en annexe. De même, un dispositif selon la présente invention sera caractérisé par les données techniques de la revendication 5. D'autres caractéristiques de ce dispositif sont exposées dans les parties caractérisantes des revendications 6 à 11.

Dans une application particulière du dispositif de l'invention, le stockage du fluide est souterrain, et l'enveloppe extérieure se trouve contre les parois cimentées ou bétonnées d'une cavité réalisée par forage. Selon une variante avantageuse de cette application particulière, l'enveloppe intérieure est constituée d'une peau intérieure étanche s'appuyant contre un matériau de remplissage poreux et rigide qui s'étend depuis ladite peau étanche jusqu'à ladite enveloppe extérieure s'appuyant sur les parois cimentés ou bétonnées de ladite cavité réalisée par forage. La rigidité de l'enveloppe intérieure est ainsi obtenue par l'interposition dudit matériau de remplissage entre ladite peau étanche et ladite enveloppe extériure. La porosité du matériau de remplissage permet la circulation dudit fluide à travers lui. Il peut s'agir de béton poreux, de certaines mousses de polyuréthane, de mousse de verre dite "Foamglas" ou de toute autre mousse à cellules ouvertes. Le peau intérieure étanche, peut être, par exemple, en acier ou en polyester.

Dans un mode de réalisation de cette variante, ladite peau étanche est plaquée contre ledit matériau de remplissage par la mise en dépression de l'espace intermédiaire par rapport au produit stocké, ledit espace intermédiaire étant occupé, au moins partiellement par ledit matériau de remplissage.

Il s'ensuit un stockage offrant, tout d'abord par sa conception même, de meilleures garanties en matière d'étanchéité puisque le réservoir présente une double enveloppe. La mise en oeuvre du procédé de surveillance de son étanchéité n'est ensuite pas tributaire de la présence d'eau sous pression tout autour. Ainsi les enveloppes du réservoir peuvent-elles être disposés n'importe où et en particulier dans une cavité souterraine peu profonde. Dans ce cas, la surveillance des variations de pression et de composition du fluide introduit entre les enveloppes intérieure et extérieure qui, selon la présente invention, s'effectue de façon séparée dans le col du stockage et dans le reste de l'espace intermédiaire entre les enveloppes, est très avantageuse. Elle permet en effet de déterminer à tout moment si c'est bien le col du réservoir qui est affecté de fuites et dont d'estimer le coût de la réparation.

D'autres caractéristiques et avantages de la présente invention apparaîtront mieux à la lecture de la description suivante donnée à titre d'exemples non limitatifs des formes possibles de réalisation de l'invention, en regard du dessen ci-joint et qui fera bien comprendre comment l'invention peut être réalisée.

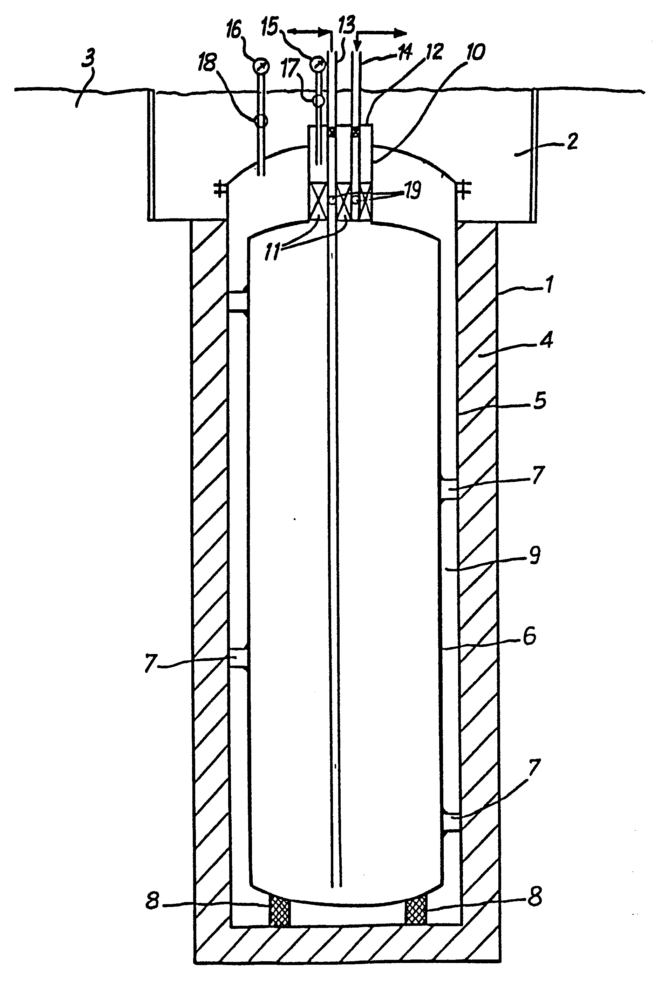

La figure unique représente la coupe schématique d'un mode de ralisation du dispositif de l'invention, appliqué au stockage souterrain d'un produit dangereux.

Sur la figure unique, on a représenté en coupe une cavité allongée verticale 1 surmontée d'une cave 2 creusées toutes deux dans le sol 3. L'enveloppe extérieure 5 se trouve contre une couche de ciment 4 qui recouvre les parois et le fond de la cavité 1. Pour ce faire, on peut descendre l'enveloppe extérieure 5 dans la cavité, en ménageant un espace de coffrage entre cette enveloppe et les parois et le fond de la cavité, puis injecter du ciment dans cet espace de coffrage, depuis sa partie inférieure, notamment le fond de ladite enveloppe extéreure. Une enveloppe intérieure rigide 6 est séparée de l'enveloppe extérieure 5 par des cales latérales ou centreurs 7 et des cales de fond ou pieds 8. Lesdites cales définissent un espace intermédiaire (annulaire) 9 entre l'enveloppe intérieure 6 et l'enveloppe extérieure 5. Lesdites enveloppes intérieure et extérieure se referment en partie supérieure, dans ou au voisinage de la cave 2, tout en assurant la continuité de l'espace annulaire 9, jusqu'à une ouverture pratiquée dans la partie supérieure de l'enveloppe intérieure 6 et se prolongeant par un col 10 s'étendant jusqu'à atteindre et traverse légèrement l'enveloppe extérieure 5. Ledit col est fermé au niveau de l'enveloppe intérieure par un bouchon intérieur 11, et par une fermeture extérieure 12 sensiblement au niveau de l'enveloppe extéieure 5. La fermeture 12 et le bouchon 11 sont traversées par des canalisations 13 et 14 pouvant servir aux mouvements d'un produit qui sera stocké dans l'enveloppe intérieure 6. Le col 10 ferme l'espace annulaire 9 en tête des deux enveloppes. Des vannes de sécurité 19 fermant les canalisations 13, 14 au niveau du bouchon 11.

L'espace annulaire 9 et l'intérieur du col 10 sont remplis par un fluide de composition connue sous des pressions connues également et inférieures à la pression de stockage dudit produit, et des moyens de mesure et de régulation ou de contrôle de pression 16, 15 et d'échantillonnage 18, 17 permettent de contrôler les pressions et surveiller les compositions du fluide contenu respectivement à l'intérieur du col 10 et de l'espace annulaire 9.

On a ainsi réalisé un stockage de produit offrant une double étanchéité vis-à-vis de l'extérieur en général et du sol en particulier, à cause de la présence des deux enveloppes successives. De plus, il est possible à tout moment de détecter une éventuelle fuite de l'une ou l'autre des deux enveloppes. En effet, si une fuite se produit par exemple dans l'enveloppe intérieure 6, la pression dudit fluid va croîte dans l'espace annulaire 9, ce qui pourra être observé grâce aux moyens de contrôle de pression 16, et comme le fluide va de plus se charger en produit stocké, il sera possible d'observer une variation de sa composition grâce aux moyens d'échantillonnage 18. On peut de même surveiller les variations de pression et de composition du fluide contenu dans le col 10, grâce aux moyens de contrôle de pression et d'échantillonnage respectivement 15, 17. Si une fuite se produit dans l'enveloppe extérieure 5, la pression dudit fluide va également varier si on l'a choisie au préalable différente de celle qui régne dans le sol, du fait de la perméabilitié intrinsèque de la couche de ciment 4.

Si on peut surveiller à la fois les variations de pression et les variations de composition dudit fluide, il est également possible de savoir laquelle des deux enveloppes fuit, et éventuellement réparer, changer la composition dudit fluide, récupérer le fluide, ou, d'une façon générale, procéder à toute intervention qui s'avèrerait souhaitable.

Les surveillances de variations de pression et/ou de composition peuvent être effectuées périodiquement, mais on peut également coupler les moyens de contrôle de pression ou d'échantillonnage à des systèmes d'alarme capables de se déclencher au-delà de certains seuils prédéterminés de variation de pression ou de composition.

La cavité peut être un forage dont la hauteur est grande par rapport au diamètre. La hauteur d'un tel forage peut aller jusqu'à une voire plusieurs centaines de mètres, et le diamètre peut être compris entre quelques décimètres et deux ou trois mères. L'enveloppe extérieure doit être suffisamment résistante pour résister au moins à la pression hydrostatique du terrain à travers le ciment.

Les canalisations 13 et 14 peuvent servir aux mouvements du produit stocké, soit en conduisant le produit lui-même, soit en conduisant une fluide de déplacement dudit produit. Selon les cas, les canalisations 13 et 14 peuvent indifféremment servir d'entrée ou de sortie dudit produit ou dudit fluide de déplacement.

L'ensemble étant enterré, y compris le cas échéant la tête du stockage, qui se trouve dans la cave 2 qui l'on peut remblayer, il est peu vulnérable aux agressions extérieures et aux accidents pouvant se produire en surface.

**Revendications**

1. Procédé de surveillance de l'étanchéité d'un stockage d'un produit fluide sous pression consistant:
à disposer ledit produit dans une enveloppe intérieure (6) ètanche entourée d'une enveloppe extérieure (5) rigide également étanche, un espace intermédiaire (9) étant maintenu entre ladite enveloppe intérieure (6) et ladite enveloppe extérieure (5) pour accueillir un fluide en phase continue de composition ainsi qu'à une pression différentes de celles dudit produit stocké,
à surveiller les variations de ladite composition dudit fluide dans ledit espace intermédiaire (9),
caractérisé en ce que les variations de ladite pression dudit fluide dans ledit espace intermédiaire (9) sont également surveillées et en ce qu'un col (10) s'étend vers l'extérieur depuis ladite enveloppe intérieure (6) au moins jusqu'à ladite enveloppe extérieure (5), ledit col (10) étant fermé de façon étanche au niveau de ladite enveloppe intérieure (6) par un bouchon (11) et au niveau de ladite enveloppe extérieure (5) par une fermeture (12) extérieure de manière à définir un premier compartiment dudit espace intermédiaire (9), ledit bouchon (11) et ladite fermeture (12) extérieure dudit col (10) étant traversés par des conduits (13, 14) de mouvement dudit produit stocké dans ladite enveloppe intérieure (6), un second compartiment étant défini par le reste dudit espace intermédiaire (9) entre lesdites enveloppes (5, 6), les variations de ladite composition et de ladite pression dudit fluide étant surveillées séparément dans chacun desdits deux compartiments.

2. Procédé de surveillance selon la revendication 1, caractérisé en ce que la composition dudit fluide est surveillée dans ledit second compartiment défini par le reste dudit espace intermédiaire (9) entre lesdites enveloppes (5, 6) tandis qu'une circulation dudit fluide est établie dans ce compartiment.

3. Procédé de surveillance selon l'une quelconque des revendications 1 ou 2, caractérisé en ce que ladite pression dudit fluid dans ledit espace intermédiaire (9) est inférieure à ladite pression dudit produit stocké.

4. Procédé de surveillance selon l'une quelconque des revendications 1 à 3, caractérisé en ce que ladite enveloppe intérieure (6) comprend une peau intérieure étanche rendue rigide par l'interposition entre ladite peau intérieure et ladite enveloppe extérieure (5) d'un matériau de remplissage poreux et rigide occupant au moins partiellement ledit espace intermédiaire (9) et à travers lequel ledit fluide peut circuler.

5. Dispositif de stockage d'un produit fluide sous pression comprenant une enveloppe intérieure (6) ètanche pour recevoir ledit produit stocké entourée d'une enveloppe extérieure (5) rigide également étanche, un espace intermédiaire (9) étant maintenu entre ladite enveloppe intérieure (6) et ladite enveloppe extérieure (5) pour acceuillir un fluide en phase continue de composition ainsi qu'à une pression différentes de celles dudit produit stocké, des moyens (17, 18) de surveillance des variations de ladite composition dudit fluide étant prévus.
caractérisé en ce que des moyens (15, 16) de surveillance des variations de ladite pression dudit fluide sont également prévus et en ce qu'un col (10) s'étend vers l'extérieur depuis ladite enveloppe intérieure (6) au moins jusqu'à ladite enveloppe extérieure (5), ledit col (10) étant fermé de façon étanche au niveau de ladite enveloppe intérieure (6) par un bouchon (11) et au niveau de ladite enveloppe extérieure (5) par une fermeture (12) extérieure de façon à définir un premier compartiment dudit espace intermédiaire (9), ledit bouchon (11) et ladite fermeture (12) extérieure dudit col (10) étant traversés par des conduits (13, 14) de mouvement dudit produit stocké dans ladite enveloppe intérieure (6), un second compartiment étant défini par le reste dudit espace intermédiaire (9) entre lesdites enveloppes (5, 6) des moyens distincts de survieillance des variations de ladite composition et de ladite pression dudit fluide étant associés à chacun desdits deux compartiments.

6. Dispositif de stockage selon la revendication 5, caractérisé en ce que lesdits moyens (17, 18) de surveillance des variations de ladite composition dudit fluide comprennent des moyens d'échantillonage dudit fluide dans ledit espace intermédiaire (9).

7. Dispositif de stockage selon l'une quelconque des revendications 5 ou 6, caractérisé en ce que ladite pression dudit fluide dans ledit espace intermédiaire (9) est inférieure à ladite pression dudit produit stocké.

8. Dispositif de stockage selon l'une quelconque des revendications 5 à 7, caractérisé en ce que ladite enveloppe extérieure (5) se trouve contre les parois (4) cimentées ou bétonnées d'une cavité (1) souterraine.

9. Dispositif de stockage selon la revendication 8, caractérisé en e que ladite cavité (1) est verticale et de forme allongée.

10. Dispositif de stockage selon la revendication 8, caractérisé en ce que ladite cavité (1) est un forage dont le diamètre est petit par rapport à sa hauteur.

11. Dispositif de stockage selon l'une quelconque des revendications 5 à 10, caractérisé en ce que ladite enveloppe intérieure (6) comprend un peau intérieure étanche rendue rigide par l'interposition entre ladite peau intérieure et ladite enveloppe extérieure (5) d'un matériau de remplissage poreux et rigide occupant au moins partiellement ledit espace intermédiaire (9) et à travers lequel ledit fluide peut circuler.

**Patentansprüche**

1. Verfahren zur Überwachung der Dichtheit bei der Lagerung eines unter Druck stehenden flüssigen Produktes durch

Lagerung der Flüssigkeit in einem dichten, von einem steifen und dichten Außenbehälter (5) umgebenen, ebenfalls dichten Innenbehälter (6), wobei zwischen dem o.a. Innenbehälter (6) und dem o.a. Außenbehälter (5) ein Zwischenraum (9) vorgesehen ist, in dem ein Medium in kontinuierlicher Kompositionsphase sowie mit einem vom Druck des gelagerten Produktes differierenden Druck eingefüllt ist,

Überwachung der Kompositionsschwankungen des o.a. Mediums in dem Zwischenraum (9),

dadurch gekennzeichnet, daß die Druckschwankung des Mediums, in dem Zwischenraum (9) weiterhin auch dadurch überwacht wird, daß eine Halsöffnung (10) von dem Innenbehälter (6) mindestens bis zum Außenbehälter (5) nach außen führt und auf Höhe des Innenbehälters (6) durch einen Stopfen (11) dichtschließend und auf Höhe des Außenbehälters (5) durch einen Außenverschluß (12) derart verschlossen ist, daß ein erstes Abteil des Zwischenraums gebildet wird, in dem durch den Innenstopfen (11) und den Außenverschluß (12) des Halses (10) Leitungen (13, 14) zum Einfüllen zu lagernden Produktes in den Innenbehälter führen, sowie ein zweites Abteil, das durch den übrigen Teil des Zwischenraums (9) zwischen Außenbehälter (5) und Innenbehälter (6) gebildet wird, wobei die Schwankung der o.a. Komposition und des o.a. Drucks in jedem der beiden Abteile getrennt überwacht werden.

2. Überwachungsverfahren nach Patentanspruch 1, dadurch gekennzeichnet, daß die Komposition des o.a. Mediums in dem o.a. zweiten Abteil überwacht wird, das aus dem übrigen Zwischenraum (9) zwischen Außenbehälter (5) und Innenbehälter (6) gebildet wird, während das Medium in diesem Abteil zirkuliert.

3. Überwachungsverfahren nach einem der Patentansprüche 1 oder 2, dadurch gekennzeichnet, daß der Druck des Mediums in dem Zwischenraum (9) niedriger ist als der des im Innenbehälter gelagerten Produktes.

4. Überwachungsverfahren nach einem der Patentansprüche 1 bis 3, dadurch gekennzeichnet, daß der Innenbehälter mit einer dichten Innenhaut versehen ist, die durch Einsetzen eines porösen und steifen Füllstoffes zwischen der Innenhaut und dem Außenbehälter (5) versteift wird, wobei der Füllstoff den Zwischenraum (9) zumindest teilweise ausfüllt und durch den das Medium zirkulieren kann.

5. Lagervorrichtung für ein unter Druck stehendes flüssiges Produkt in einem dichten, von einem steifen und dichten Außenbehälter (5) umgebenen, ebenfalls dichten Innenbehälter (6), wobei zwischen dem o.a. Innenbehälter (6) und dem o.a. Außenbehälter (5) ein Zwischenraum (9) vorgesehen ist, in dem ein Medium in kontinuierlicher Kompositionsphase sowie mit einem vom Druck des gelagerten Produktes differierenden Druck eingefüllt ist, wobei Überwachungsmittel (17, 18) für die Kompositionsschwankungen des o.a. Mediums in dem Zwischenraum (9) vorgesehen sind,

dadurch gekennzeichnet, daß für die Druckschwankung des Mediums ebenfalls Überwuchungsmittel (15, 16) vorgesehen sind und daß eine Halsöffnung (10) von dem Innenbehälter (6) mindestens bis zum Außenbehälter (5) nach außen führt und auf Höhe des Innenbehälters (6) durch einen Stopfen (11) dichtschließend und auf Höhe des Außenbehälters (5) durch einen Außenverschluß (12) derart verschlossen ist, daß ein erstes Abteil des Zwischenraums gebildet wird, in dem durch den Innenstopfen (11) und den Außenverschluß (12) des Halses (10) Leitungen (13, 14) zum Einfüllen zu lagernden Produktes in den Innenbehälter führen, sowie ein zweites Abteil das durch den übrigen Teil des Zwischenraums (9) zwischen Außenbehälter (5) und Innenbehälter (6) gebildet wird, wobei die Schwankung der o.a. Komposition und des o.a. Drucks in jedem der beiden Abteile getrennt überwacht werden.

6. Lagervorrichtung nach Patentanspruch 5, dadurch gekennzeichnet, daß die Mittel (17, 18) zur Überwachung der Komposition des Mediums Vorrichtungen zur Probenahme des Mediums in dem Zwischenraum (9) besitzen.

7. Lagervorrichtung nach einem der Patentansprüche 5 oder 6, dadurch gekennzeichnet, daß der Druck des Mediums in dem Zwischenraum (9) niedriger ist als der des im Innenbehälter gelagerten Produktes.

8. Lagervorrichtung nach einem der Patentansprüche 5 bis 7, dadurch gekennzeichnet, daß der Außenbehälter (5) an die zementierten oder betonnierten Wände (4) einer unterirdischen Aushöhlung (1) anliegt.

9. Lagervorrichtung nach Patentanspruch 8, dadurch gekennzeichnet, daß die o.a. Höhlung (1) senkrecht steht und länglich ausgebildet ist.

10. Lagervorrichtung nach Patentansprüche 8, dadurch gekennzeichnet, daß die o.a. Höhlung (1) in Form einer Böhrung besteht, deren Durchmesser deutlich kleiner als ihre Höhe ist.

11. Lagervorrichtung nach einem der Patentansprüche 5 bis 10, dadurch gekennzeichnet, daß der Innenbehälter mit einer dichten Innenhaut versehen ist, ist durch Einsetzen eines porösen und steifen Füllstoffes zwischen der Innenhaut und dem Außenbehälter (5) versteift wird, wobei der Füllstoff den Zwischenraum (9) zumindest teilweise ausfüllt und durch den das Medium zirkulieren kann.

## Claims

1. Process for controlling the tightness of a reservoir storing a pressurized fluid product consisting:

in disposing said product in an internal sealed envelope (6) surrounded by an external rigid envelope (5) also sealed, an intermediate space (9) being maintained between said internal envelope (6) and said external envelope (5) for receiving a fluid in continuous composition phase as well as at a different pressure from that of said stored product,

in controlling the variations of said composition of said fluid in said intermediate space (9),

characterized in that the variations of said pressure of said fluid in said intermediate space (9) are also controlled and in that a neck (10) extends outwardly from said internal envelope (6) at least as far as said external envelope (5), said neck (10) being sealingly closed at the level of said internal envelope (6) by a plug (11) and at the level of said external envelope (5) by an external closure (12) so as to define a first compartment of said intermediate space (9), said plug (11) and said external closure (12) of said neck (10) being traversed by ducts (13, 14) for movement of said product stored in said internal envelope (6), a second compartment being defined by the rest of said intermediate space (9) between said envelopes (5, 6), the variations of said composition and of said pressure of said fluid being controlled separately in each of said two compartments.

2. Control process according to Claim 1, characterized in that the composition of said fluid is controlled in said second compartment defined by the rest of said intermediate space (9) between said envelopes (5, 6) whereas a flow of said fluid is established in this compartment.

3. Control process according to one of Claims 1 or 2, characterized in that said pressure of said fluid in said intermediate space (9) is less than said pressure of said stored product.

4. Control process according to any one of Claims 1 to 3, characterized in that said internal envelope (6) comprises a sealed inner skin made rigid by positioning beween said inner skin and said external envelope (5) a porous and rigid filling material occupying at least partially said intermediate space (9) and through which said fluid may flow.

5. Device for storing a pressurized fluid product comprising an internal sealed envelope (6) for receiving said stored product surrounded by an external rigid envelope (5) also sealed, an intermediate space (9) being maintained between said internal envelope (6) and said external envelope (5) for receiving a fluid in continuous composition phase as well as at a different pressure from that of said stored product, means (17, 18) for controlling the variations of said composition of said fluid being provided,

characterized in that means (15, 16) for controlling the variations of said pressure of said fluid are also provided and in that a neck (10) extends outwardly from said internal envelope (6) at least as far as said external envelope (5), said neck (10) being sealingly closed at the level of said internal envelope (6) by a plug (11) and at the level of said external envelope (5) by an external closure (12) so as to define a first compartment of said intermediate space (9), said plug (11) and said external closure (12) of said neck (10) being traversed by ducts (13, 14) for movement of said product stored in said internal envelope (6), a second compartment being defined by the rest of said intermediate space (9) between said envelopes (5, 6), separate means for controlling the variations of said composition and of said pressure of said fluid being associated with each of said two compartments.

6. Storage device according to Claim 5, characterized in that said means (17, 18) for controlling the composition of said fluid comprise means for sampling said fluid in said intermediate space (9).

7. Storage device according to any one of Claims 5 or 6, characterized in that said pressure of said fluid in said intermediate space (9) is less than said pressure of said stored product.

8. Storage device according to any one of Claims 5 to 7, characterized in that said external envelope (5) is situated against the cemented or concreted walls (4) of an underground cavity (1).

9. Storage device according to Claim 8, characterized in that said cavity (1) is vertical and elongate.

10. Storage device according to Claim 8, characterized in that said cavity (1) is a drill-hole whose diameter is small with respect to its height.

11. Storage device according to any one of Claims 5 to 10, characterized in that said internal envelope (6) comprises a sealed inner skin made rigid by positioning between said inner skin and said external envelope (5) a porous and rigid filling material occupying at least partially said intermediate space (9) and through which said fluid may flow.